# EUROPÄISCHE PATENTANMELDUNG

(11) **EP 1 449 493 A2**
(43) Veröffentlichungstag der Anmeldung: **25.08.2004**
(21) Anmeldenummer: 04002928.2
(22) Anmeldetag: 10.02.2004
(51) Int. Cl.: A61C 1/08, A61C 1/00, A61C 1/18, A61C 13/15

(54) **Adapter für ein medizinisches Lichtgerät**

(30) Priorität: 20.02.2003 AT 2532003
(71) Anmelder: W & H Dentalwerk Bürmoos GmbH, 5111 Bürmoos (AT)
(72) Erfinder: Schneider, Rainer, 5120 St. Pantaleon (AT)

(57) **Zusammenfassung**

Die Erfindung betrifft einen Adapter (5) für ein Handstücksystem (1), insbesondere mit einem medizinischen Lichtgerät (2) zur Aussendung von Strahlung zum Aushärten photopolymerisierbarer Materialien oder mit einem Handstück (40), in denen als Lichtquelle eine LED angeordnet ist. Eine Vorrichtung, bevorzugt in Form eines Adapters (5), ermöglicht es dem Anwender die Kontakte im Versorgungsschlauch (4) mit jenen der LED im Lichtgerät (2) /Handstück (40) bezüglich ihrer Polarität korrekt in Übereinstimmung zu bringen, ohne dafür einen Fachmann (Servicetechniker) zu benötigen.

## Beschreibung

Die Erfindung betrifft einen Adapter für ein Handstücksystem, insbesondere mit einem medizinischen und dentalen Lichtgerät zur Aussendung von Strahlung zum Aushärten photopolymerisierbarer Materialien, insbesondere zum Füllen von Kavitäten und zur Befestigung von Zahnregulierungen, sowie zum Nachweis von Karies oder Bleichen von Zahnoberflächen.

Die Stromversorgung derartiger Lichtgeräte erfolgt entweder mittels Batterien, die im Handgerät untergebracht sind, wie beispielsweise in der FR 2818892 A1 beschrieben und / oder durch Anschluß an eine externe Spannungsquelle. Bevorzugt erfolgt dies durch Ankuppeln des Lichtgerätes an einen vorhandenen Versorgungsschlauch für luftbetriebene Geräte einer Dentaleinheit. Dem Anwender wird damit ermöglicht das Lichtgerät als Teil der bestehenden, gewohnten Einheit zu bedienen, auch werden keine zusätzlichen Anschaffungskosten für Steuervorrichtungen etc. verursacht.

Versorgungsschläuche für luftbetriebene Geräte beinhalten mehrere Medienleitungen, darunter auch eine zweipolige Stromleitung für eine Spannung von 3,3 V. Die beiden Enden der Stromleitung treten entsprechend der europäischen Norm EN 29168 als elektrische Kontakte an vorgeschriebener Stelle, mit entsprechender Beabstandung von den anderen Medienleitungen und bündig mit der Planfläche endend am Anschlußteil des Versorgungsschlauchs aus. Die Norm beinhaltet jedoch keinen Hinweis über die Anordnung der Polarität der beiden Kontakte und während der Montage der Dentaleinheit bzw. des Anschlusses der Versorgungsschläuche wird darauf auch nicht geachtet, so daß schließlich nicht bekannt ist, welcher der beiden Kontakte den Pluspol bzw. den Minuspol repräsentiert. In der Praxis ist dies auch nicht notwendig, da über die Kontakte in den luftbetriebenen Geräten enthaltene Lämpchen zur Beleuchtung der Präparationsstelle angespeist werden und diese unabhängig von der Anordnung der Polarität leuchten.

Im Gegensatz dazu ist es für den Betrieb bzw. vor dem erstmaligen Einsatz des Lichtgerätes unbedingt notwendig die Polarität der Kontakte des Versorgungsschlauches zu kennen und mit den Kontakten des Lichtgeräts abzustimmen, da die im Lichtgerät eingesetzte(n) Leuchtdiode(n) auf einen korrekten Anschluß angewiesen sind.

Die Bestimmung der Polarität der beiden Kontakte erfolgt zur Zeit durch einen Servicetechniker, der dafür extra zum Anwender fahren muß. Stimmt die Polarität der Kontakte des Versorgungsschlauchs nicht mit der Anordnung im Lichtgerät überein, so vertauscht der Techniker die Anschlüsse des Versorgungsschlauchs in der Dentaleinheit.

Ein Hersteller legt jedem Lichtgerät ein Prüfgerät bei, mit dem der Anwender selbst feststellen kann, ob die Anordnung der Kontakte im Versorgungsschlauch mit jenen im Lichtgerät übereinstimmt. Auch in diesem Fall wird eine gegebenenfalls notwendige Korrektur des Anschlusses des Versorgungsschlauchs jedoch von einem Servicetechniker durchgeführt. Beide Varianten sind somit äußerst zeitaufwendig und kostenintensiv.

Es besteht daher der dringende Bedarf an einer einfacheren, günstigen Lösung, die es dem Anwender selbst ermöglicht das Lichtgerät ohne Unterstützung eines Fachmanns in Betrieb nehmen zu können.

Diese Aufgabe wird gemäß der vorliegenden Erfindung durch eine Vorrichtung, z.B. in Form eines Adapters, mit den Merkmalen des Anspruchs 1 bzw. durch ein Lichtgerät nach Anspruch 9 bzw. durch ein Handstücksystem nach Anspruch 10 gelöst. Besonders vorteilhafte Ausführungsformen sind in den entsprechenden Unteransprüchen angeführt.

Erfindungsgemäß beinhaltet der Adapter Leiter zur Spannungsversorgung des Lichtgeräts, wobei diese Leiter entweder als durchgängige Leiter ausgebildet sind und der Adapter in Bezug auf die Kontakte der Lichtquelle um seine Längs- oder Querachse drehbar ist oder die Leiter in Abschnitte unterteilt sind, wobei es starre Abschnitte und bewegliche Abschnitte gibt und durch Verbinden der beweglichen Abschnitte mit den starren Abschnitten unterschiedliche Leiterverläufe entstehen.

In einem Ausführungsbeispiel beinhaltet der Adapter zwei Leiter, die an den beiden Enden des Adapters jeweils paarweise als Kontakte austreten, wobei die beiden Leiter so verlaufen, daß sie einander im Inneren des Adapters kreuzen, so daß die Anordnung der Kontakte an den beiden Enden des Adapters genau entgegengesetzt ist. Der Anwender kann diesen Adapter nun in einer zufällig gewählten Position in das Handstücksystem, das zumindest aus einem Lichtgerät und einem Versorgungsschlauch besteht, einfügen, das Handstücksystem mit dem Adapter zusammenstecken und anschließend in Betrieb nehmen und, falls ein Betrieb des Lichtgeräts nicht möglich ist, das Handstücksystem wieder trennen, den Adapter um 180° um seine Querachse drehen und in dieser zweiten Position wiederum in das Handstücksystem einbauen, um das Lichtgerät anschließend betreiben zu können.

In einem bevorzugten Ausführungsbeispiel wird der Anschluß des Lichtgeräts an den Versorgungsschlauch über eine Drehkupplung hergestellt, die an ihrem distalen Ende Schleifringe zur Spannungsübertragung aufweist. Der Adapter wird zwischen das Lichtgerät und die Kupplung positioniert und der Anschluß der Lichtquelle an eine externe Spannungsquelle erfolgt über Schleifkontakte im Adapter, die die Schleifringe der Kupplung kontaktieren. Die passende Kontaktierung wird durch Drehung der Kupplung um ihre Längsachse in Bezug auf die Kontakte der Lichtquelle hergestellt.

In einem besonders bevorzugten Ausführungsbeispiel ist der Adapter nicht als eigenständiges Bauteil, sondern als Teil des Lichtgerätes bzw. der Griffhülse eines Handstücksystems, das zumindest aus einem Versorgungsschlauch mit einer distalen Kupplungsvorrichtung mit Kontakten zur Spannungsübertragung von einer externen Spannungsquelle und einer Griffhülse mit einer darin enthaltenen Lichtquelle, Kontakten zum Anschluß der Lichtquelle an eine externe Spannungsquelle und einer proximalen Kupplungsvorrichtung besteht, ausgebildet. Dadurch verringert sich die Anzahl der Schnittstellen und Bruchlinien, an denen sich Schmutzpartikel oder Krankheitserreger ansammeln können.

Anspruch 13 beschreibt ein vereinfachtes Verfahren, das es dem Anwender mit Hilfe des erfindungsgemäßen Adapters ermöglicht, die passende Kontaktierung herzustellen, ohne dazu die Unterstützung eines Servicetechnikers zu benötigen.

Die Erfindung wird nachfolgend anhand bevorzugter Ausführungsbeispiele und Bezug nehmend auf die beigefügten Zeichnungen erläutert:
- Figur 1: zeigt ein erfindungsgemäßes Handstücksystem mit einem Lichtgerät und dem Adapter.
- Figur 2: zeigt den in Figur 1 gekennzeichneten Ausschnitt mit dem erfindungsgemäßen Adapter als Schnittdarstellung.
- Figur 3A und 3B: zeigt den erfindungsgemäßen Adapter in der Griffhülse fixiert und in zwei unterschiedlichen, vorbestimmten Positionen, eine lösbare Verbindung mit den Kontakten der Lichtquelle eingehend.
- Figur 4A und 4B: zeigt ein alternatives Ausführungsbeispiel des erfindungsgemäßen Adapters in zwei unterschiedlichen Kontaktierungen.
- Figur 5: zeigt ein erfindungsgemäßes Handstücksystem mit einem luftbetriebenen Turbinenhandstück und dem Adapter.
Gleiche Bauteile sind in allen Darstellungen mit den selben Ziffern beschriftet.

Die verwendeten Bezeichnungen distal und proximal beziehen sich auf die Dentaleinheit (Behandlungsstuhl); mit dem das Handstücksystem verbunden wird: Proximal bedeutet die der Dentaleinheit nähere, zugewandte Seite eines Bauteils, distal die der Dentaleinheit abgewandte, entferntere Seite.

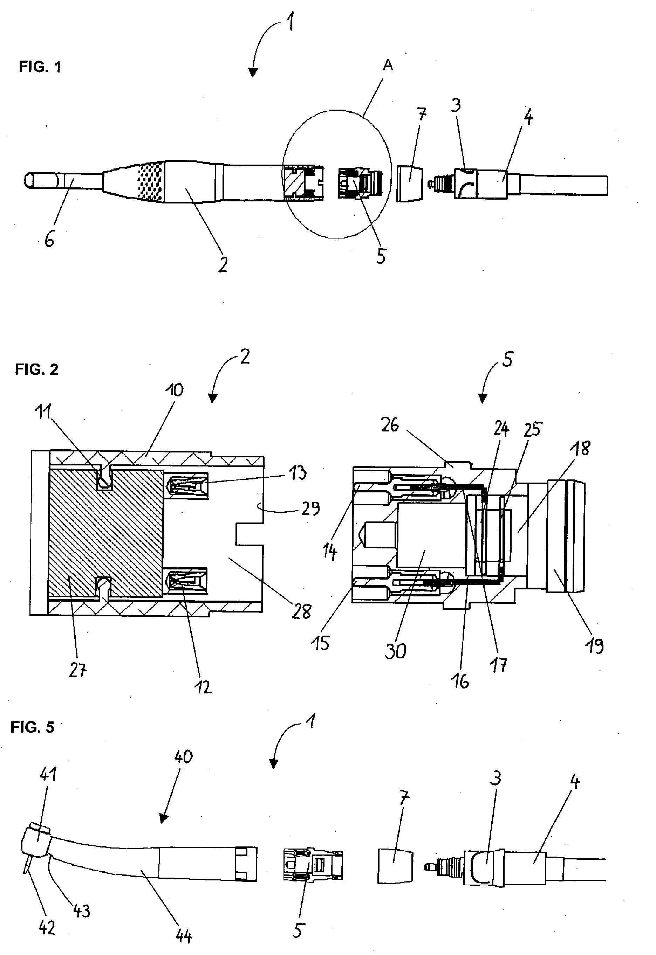

In Figur 1 ist ein Handstücksystem 1, bestehend aus dem Lichtgerät 2, der Drehkupplung 3 und dem Versorgungsschlauch 4 dargestellt, in dem ein erfindungsgemäßer Adapter 5 implementiert ist. Am distalen Ende des Lichtgeräts 2 ist ein Lichtleiter 6 angeordnet, der das Licht der im Lichtgerät 2 enthaltenen Lichtquelle (nicht dargestellt) zur Behandlungsstelle leitet. Der erfindungsgemäßen Adapter 5 ist als Teil des Lichtgeräts 2 ausgeführt und wird über die Endkappe 7 der Griffhülse 10 fixiert. Daran schließt eine Drehkupplung 3 an, über die die Verbindung mit dem Versorgungsschlauch 4 und einer externen Spannungsquelle hergestellt wird und die gleichzeitig eine freie Drehbarkeit des Lichtgeräts 2 gegenüber dem Versorgungsschlauch 4 gewährleistet.

Das in Figur 2 dargestellte Detail entspricht dem in Figur 1 mit "A" gekennzeichnetem Ausschnitt. Es sind der erfindungsgemäße Adapter 5 und das proximale Ende des Lichtgerätes 2 zu erkennen. Der Adapter 5 besteht aus einem Adaptergehäuse 26, durch das axial zwei durchgängige Leiter 16 und 17 verlaufen, die an ihren distalen Enden als nicht drehbare, lösbare Kontakte, bevorzugt als Steckkontakte 14 und 15, enden, wobei jedoch auch andere lösbare Kontakte, z.B. Federkontakte, denkbar sind. Durch Einschieben des Adapters 5 durch die Öffnung 29 des Lichtgeräts 2 in einen durch die Griffhülse 10 gebildeten Hohlraum 28 können die Kontakte 14, 15 des Adapters in die Buchsen 12, 13 gesteckt werden. Die Kontaktierung kann durch zwei mögliche, vorbestimmte Positionen des Adapters 5 realisiert werden: Wie in Figur 2 dargestellt können Kontakt 14 und Buchse 13 sowie Kontakt 15 und Buchse 12 miteinander verbunden werden (Position 1). Durch eine Drehung des Adapters 5 um seine Längsachse um 180° werden Kontakt 14 und Buchse 12 sowie Kontakt 15 und Buchse 13 miteinander verbunden (Position 2). Über die Steckbuchsen 12, 13 erfolgt die Spannungsversorgung der Platine 27, die über Positionsstifte 11 der Griffhülse 10 fixiert wird, und der Lichtquelle.

Die proximalen Enden der Leiter 16 und 17 des Adapters 5 sind als Schleifkontakte 24, 25 ausgebildet und ragen, gestützt durch die Aufnahme 18 radial nach innen. Über die Verriegelung 19 wird die Kupplung 3 mit dem Versorgungsschlauch 4 in den Hohlraum 30 des Adapters 5 eingeschoben und damit ein Handstücksystem 1 entsprechend Figur 1 geschaffen.

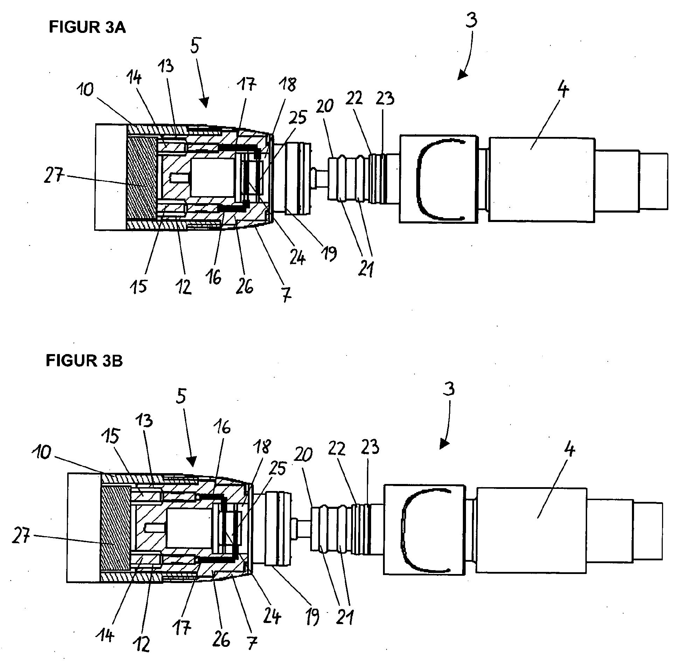

Figur 3A zeigt den Adapter 5 im Endteil der Griffhülse 10 eingesetzt, wobei Buchse 13 mit Kontakt 14 und Buchse 12 mit Kontakt 15 miteinander verbunden sind (entspricht Position 1). Die an den Adapter 5 anschließende Kupplung 3 weist einen Kupplungszapfen 20 auf, der zwei Dichtringe 21 und zwei Schleifringe 22, 23 trägt. Durch Einfügen des Kupplungszapfens 20 in den Adapter 5 kommt es zur Kontaktierung der Schleifkontakte 24, 25 mit den Schleifringen 22, 23. Die Schleifringe 22, 23 stehen über Leiter und Steckkontakte in der Kupplung 3 mit Leitern im Versorgungsschlauch 4 in Verbindung, so daß, wenn die einzelnen Geräte entsprechend Figur 1 zusammengefügt werden, in bekannter Weise eine Spannungsversorgung der Lichtquelle in der Griffhülse 10 des Lichtgeräts 2 durch eine externe Spannungsquelle über die Kontakte 12 ― 15, die Leitungen 16, 17, deren Schleifkontakte 24, 25, die Schleifringe 22, 23, die Kupplung 3 und den Versorgungsschlauch 4 erfolgt.

Unbekannt ist jedoch die Polarität der beiden Schleifkontakte 22, 23, da üblicherweise über die Kontakte in luftbetriebenen Geräten enthaltene Lämpchen zur Beleuchtung der Präparationsstelle angespeist werden und diese unabhängig von der Anordnung der Polarität leuchten. Im Gegensatz dazu sind im Lichtgerät 2 eingesetzte Leuchtdiode auf eine korrekte Kontaktierung angewiesen. Dies bedeutet, daß die in Figur 3A dargestellte Kontaktierung den Betrieb des Lichtgeräts 2 unmöglich macht, da der Schleifring 23, der den Minuspol repräsentiert, über Schleifkontakt 25, Leitung 17 und Steckkontakt 14 mit Steckbuchse 13 verbunden ist, die jedoch an den Pluspol der Lichtquelle angeschlossen ist. Gleiches gilt für den Schleifring 22 als Pluspol, der über Schleifkontakt 24, Leitung 16 und Steckkontakt 15 mit Buchse 12 und damit den Minuspol der Lichtquelle verbunden ist (Position 1).

Mit Hilfe des erfindungsgemäßen Adapters 5 kann der Anwender jedoch auf einfache Weise die Kontaktierung ändern (Position 2), siehe Figur 3B. Dazu wird die Kupplung 3 vom Adapter 5 getrennt, der Adapter 5 aus der Griffhülse 10 entnommen, um seine Längsachse um 180° in eine zweite mögliche, vorbestimmte Position gedreht und wiederum in die Griffhülse eingesetzt. Die neue Kontaktierung verläuft nun von Schleifring 23, der den Minuspol repräsentiert, über Schleifkontakt 25, Leitung 17 und Steckkontakt 14 zu Steckbuchse 12, die an den Minuspol der Lichtquelle angeschlossen ist, bzw. über Schleifring 22 als Pluspol, Schleifkontakt 24, Leitung 16 und Steckkontakt 15 zu Buchse 13, und damit zum Pluspol der Lichtquelle (Position 2). Damit ist die korrekte Kontaktierung hergestellt und das Lichtgerät kann betrieben werden. Da der Adapter 5 über die Steckkontakte 12 ―15 fest mit der Lichtquelle verbunden ist und des weiteren durch die Endkappe 7 (Figur 1) fixiert wird, ist die Auswahl der korrekten Position durch den Anwender nur einmal, bei Inbetriebnahme des Lichtgeräts 2 durchzuführen.

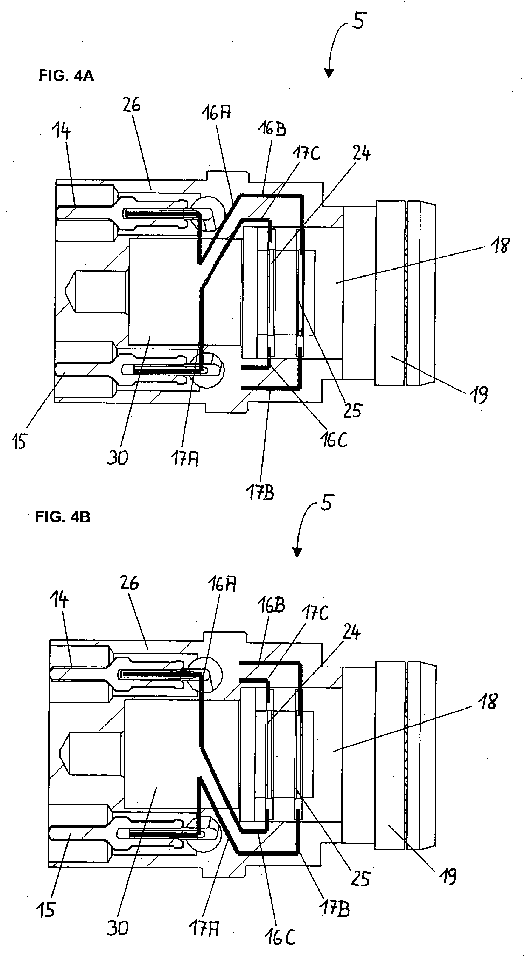

Bei dem in den Figuren 4A und 4B dargestellten alternativen Ausführungsbeispiel des erfindungsgemäßen Adapters 5 sind die Leiter 16, 17 in mehrere Abschnitte 16A, 16B, 16C bzw. 17A, 17B, 17C unterteilt. Die starren Abschnitte 16B, 16C, 17B und 17C sind mit den Schleifkontakten 24, 25 verbunden, die beweglichen Abschnitte 16A, 17A mit den Steckkontakten 14, 15. Über ein Bedienelement, bevorzugt ein Schalter (nicht dargestellt), können die bewegbaren Leiterabschnitte 16A bzw. 17A. mit den starren Abschnitten 16B bzw. 17C (Position 1, Figur 4A) oder mit den Abschnitten 16C bzw. 17B (Position 2, Figur 4B) verbunden werden, um unterschiedliche Leiterverläufe und damit die gewünschte Kontaktierung zu erhalten. Vorteilhaft ist bei diesem Ausführungsbeispiel die einfachere Bedienung, da der Anwender nur noch die Endkappe 7 von der Griffhülse 10 lösen muß, ohne den Adapter 5 aus der Griffhülse 10 oder dem Lichtgerät 2 herausnehmen und in die passende Position drehen zu müssen. Anstatt lösbar können die Kontakte 12 ― 15 bei diesem Ausführungsbeispiel fix miteinander verbunden werden. In einem besonders bevorzugten Ausführungsbeispiel steht der Schalter von Adapter 5 mit einem weiteren Bedienelement an der Außenseite der Griffhülse 10 in Wirkverbindung, so daß der Anwender auch die Endkappe 7 nicht mehr lösen muß, um die gewünschte Kontaktierung auswählen zu können.

Die Erfindung ist nicht auf das dargestellte Ausführungsbeispiel beschränkt. Insbesondere kann der Adapter 5 als ein eigenständiger Bauteil oder als Teil eines beliebigen Geräts des Handstücksystems 1 ausgebildet sein. Auch ist die Anordnung des Adapters 5 nicht auf das proximale Ende des Lichtgeräts 2 oder der Griffhülse 10 beschränkt, viel mehr kann der Adapter 5 an oder in jedes Bauteil des Handstücksystems 1 angefügt bzw. eingefügt werden. Bei dem drehbar ausgeführten Adapter gemäß Figur 3A und 3B ist der Drehwinkel zwischen den möglichen, vorbestimmten Positionen nicht auf ein bestimmtes Maß eingeschränkt; sondern hängt von der Anordnung der Kontakte im Bauteil, an das der Adapter 5 angefügt wird, ab.

Weiters ist die Zuordnung der Schleifkontakte 24, 25 und der Schleifringe 22, 23 zu bestimmten Bauteilen rein exemplarisch und im Sinne der kinematischen Umkehrung auch entgegengesetzt möglich.

Neben dem Einsatz in Lichtgeräten kann der erfindungsgemäße Adapter 5 auch in Handstücksystemen mit anderen chirurgischen und medizinischen Instrumenten, die mit Leuchtdioden ausgestattet sind, wie zum Beispiel luftbetriebenen Turbinen, motorbetriebenen Handund Winkelstücken, Laserhandstücken, Spritzhandstücken, Scalern zur Zahnsteinentfernung, Sägen, medizinischen Kamerahandstücken, Endoskopen, Spiegeln oder Kaltlichtquellen zur Beleuchtung von Operationsstellen, zur Anwendung kommen.

Als ein mögliches Beispiel ist in Figur 5 ein Handstücksystem 1 mit einem luftbetriebenem Turbinenhandstück 40 dargestellt. Das Turbinenhandstück 40 hat einen Kopfteil 41 mit einer Kupplungsvorrichtung zur lösbaren Aufnahme eines Bearbeitungswerkzeugs 42, z.B. eines Dentalbohrers. In dem Turbinenhandstück 40, bevorzugt in der Griffhülse 44, sind ein oder mehrere Lichtquellen in Form von LEDs angeordnet. Die LEDs können in unmittelbarer Nähe der Öffnung 43 angeordnet sein, so daß ihr Licht direkt auf die Behandlungsstelle und die Spitze des Bearbeitungswerkzeugs fällt, oder entfernt von der Öffnung 43, wobei in diesem Fall das Licht über Lichtleiter, z.B. einen Glas- oder Glasfaserstab, zur Öffnung 43 geleitet wird.

Neben Licht wird auf die Behandlungsstelle auch oftmals ein Flüssigkeitsspray, z.B. bestehend aus einer Mischung aus Wasser und Druckluft, vom distalen Ende des Handstücks 40 abgegeben. Beide Medien werden über Leitungen, die im Versorgungsschlauch 4 angeordnet sind und durch die Kupplung 3 und die Griffhülse 44 verlaufen, zum Vorderbereich des Handstücks 40 geführt. Um die Versorgung mit Flüssigkeitsspray auch bei Verwendung des Adapters 5 sicherzustellen, muß auch der Adapter 5 mit entsprechenden Leitungen oder Bohrungen für das Wasser und die Druckluft versehen sein, wobei die Leitungen bevorzugt im Inneren des Adapters 5 angeordnet sind.

Auch für die Übertragung der Antriebsenergie zum Werkzeug 42, bevorzugt Druckluft für Turbinenhandstücke 40, sind entsprechende Bohrungen oder Leitungen im Adapter 5 vorzusehen. Bei motorbetriebenen Hand- und Winkelstücken muß eine Bohrung vorhanden sein, in der die Antriebswelle, die die vom Motor erzeugte Antriebsbewegung auf das Werkzeug 42 überträgt, angeordnet ist.

## Patentansprüche

1. Adapter (5) um eine Übereinstimmung der Polarität der Kontakte (12 ― 15) innerhalb eines Handstücksystems (1), das zumindest aus zwei Bauteilen, zum Beispiel einem Versorgungsschlauch (4) und einem medizinischen Instrument (2), besteht, herbeizuführen.

2. Adapter (5) nach Anspruch 1,
**gekennzeichnet durch**
Leiter zur Spannungsübertragung, wobei diese als durchgängige Leiter (16, 17) ausgebildet sind und der Adapter (5) in Bezug auf die Kontakte (12, 13) der Lichtquelle um seine Längsoder Querachse drehbar ist und mit den Kontakten (12, 13) der Lichtquelle oder mit Kontakten, die mit der Lichtquelle in Verbindung stehen, in mehr als einer vorbestimmten Position eine feste, aber lösbare Verbindung eingeht.

3. Adapter (5) nach Anspruch 2,
**dadurch gekennzeichnet, daß**
die Anzahl der vorbestimmten Positionen zahlenmäßig begrenzt ist.

4. Adapter (5) nach Anspruch 2 oder 3,
**dadurch gekennzeichnet, daß**
jeweils ein Ende der Leiter (16, 17) als Schleifkontakt (24, 25) ausgebildet ist.

5. Adapter (5) nach Anspruch 4,
**dadurch gekennzeichnet, daß**
die anderen Enden der Leiter (16, 17) jeweils als nicht drehbare Kontakte, bevorzugt als Steckkontakte (14, 15), ausgebildet sind.

6. Adapter (5) nach Anspruch 1,
**gekennzeichnet durch**
Leiter zur Spannungsübertragung, wobei diese in Abschnitte (16A-16C, 17A-17C) unterteilt sind, wobei es starre Abschnitte (16B, 16C, 17B, 17C) und bewegliche Abschnitte (16A, 17A) gibt und **durch** Verbinden der beweglichen Abschnitte (16A, 17A) mit den starren Abschnitten (16B, 16C, 17B, 17C) unterschiedliche Leiterverläufe entstehen.

7. Adapter (5) nach Anspruch 6,
**gekennzeichnet durch**
ein Bedienelement, bevorzugt einen Schalter, das die Verbindung zwischen den beweglichen Abschnitten (16A, 17A) und den starren Abschnitten (16B, 16C, 17B, 17C) herstellt.

8. Adapter (5) nach einem der vorhergehenden Ansprüche,
**gekennzeichnet durch**
Leitungen oder Bohrungen für den Transport von Flüssigkeiten und / oder Druckluft und /oder zur Übertragung von Antriebsenergie.

9. Lichtgerät (2) oder Handstück (40) mit einer Griffhülse (10, 44), einer darin angeordneten Lichtquelle und Kontakten (12, 13) zum Anschluß der Lichtquelle an eine externe Spannungsquelle,
**dadurch gekennzeichnet, daß**
an das proximale Ende des Lichtgerätes (2) oder des Handstücks (40) ein Adapter (5) gemäß einem der Ansprüche 1 bis 8 angeschlossen oder als Teil des Lichtgeräts (2) oder des Handstücks (40) in dieses eingefügt ist.

10. Handstücksystem (1) zumindest bestehend aus
- einem Versorgungsschlauch (4) mit einer distalen Kupplungsvorrichtung mit Kontakten zur Spannungsübertragung von einer externen Spannungsquelle
- und einer Griffhülse (10, 44) mit einer darin enthaltenen Lichtquelle, Kontakten (12, 13) zum Anschluß der Lichtquelle an eine externe Spannungsquelle und einer proximalen Kupplungsvorrichtung,
**dadurch gekennzeichnet, daß**
zwischen der Griffhülse (10, 44) und dem Versorgungsschlauch (4) ein Adapter (5) gemäß einem der Ansprüche 1 bis 8 als eigenständiges Bauteil oder als Teil eines beliebigen Geräts des Handstücksystems 1 eingefügt ist.

11. Lichtgerät (2) oder Handstück (40) nach Anspruch 9 oder Handstücksystem (1) nach Anspruch 10,
**dadurch gekennzeichnet, daß**
das Lichtgerät (2) oder das Handstück (40) oder das Handstücksystem (1) mit einem Adapter (5) gemäß einem der Ansprüche 2 bis 5 ausgestattet sind, wobei der Adapter (5) mit den Kontakten (12, 13) der Lichtquelle oder mit Kontakten, die mit der Lichtquelle in Verbindung stehen, in zwei vorbestimmten Positionen eine lösbare Verbindung eingeht, und diese zwei Positionen durch eine Drehung des Adapters (5) um 180° festgelegt sind.

12. Lichtgerät (2) oder Handstück (40) nach Anspruch 9 oder Handstücksystem (1) nach Anspruch 10 oder 11,
**dadurch gekennzeichnet, daß**
am distalen Ende des Lichtgeräts (2) oder der Griffhülse (10) oder im Inneren der Griffhülse (44) des Handstücks (40) einen Lichtleiter (6) angeordnet ist, der das Licht der Lichtquelle zur Behandlungsstelle leitet.

13. Verfahren um eine Übereinstimmung der Polarität der Kontakte (12―15) innerhalb eines zumindest zweistückigen Handstücksystems (1) herbeizuführen,
**dadurch gekennzeichnet, daß**
das zumindest zweistückige Handstücksystem (1) getrennt wird, ein Adapter (5) in einer möglichen und zufällig gewählten ersten Position in die Schnittstelle der beiden Teile des Handstücksystems (1) eingefügt wird, das Handstücksystem (1) mit dem Adapter (5) zusammengefügt und anschließend in Betrieb genommen wird und, falls ein Betrieb nicht möglich ist, der Adapter (5) in eine von der ersten, zufällig gewählten Position abweichende zweite Position gebracht wird.
